# FASCICULE DE BREVET EUROPEEN

(11) **EP 1 205 356 B1**
(45) Date de publication et mention de la délivrance du brevet: **14.07.2004**
(21) Numéro de dépôt: 01402757.7
(22) Date de dépôt: 24.10.2001
(51) Int. Cl.: B60R 7/04

(54) **Console centrale de véhicule automobile**
Mitteltunnel eines Kraftfahrzeugs
Vehicle central console

(30) Priorité: 14.11.2000 FR 0014602
(43) Date de publication de la demande: 15.05.2002
(73) Titulaire: SAI AUTOMOTIVE ALLIBERT INDUSTRIE, 92748 Nanterre (FR)
(72) Inventeur: Pegorier, Nicolas, Sai Automotive Allibert Ind., 60114 Meru Cedex (FR)
(74) Mandataire: Lerner, François

(56) Documents cités:
- DE-U- 9 212 168
- US-A- 5 076 641
- US-A- 5 562 331
- US-A- 6 003 716
- PATENT ABSTRACTS OF JAPAN vol. 1996, no. 02, 29 février 1996 (1996-02-29) & JP 07 266966 A (HONDA ACCESS:KK), 17 octobre 1995 (1995-10-17)
- PATENT ABSTRACTS OF JAPAN vol. 1996, no. 06, 28 juin 1996 (1996-06-28) & JP 08 048189 A (PIOLAX INC), 20 février 1996 (1996-02-20)
- PATENT ABSTRACTS OF JAPAN vol. 1996, no. 10, 31 octobre 1996 (1996-10-31) & JP 08 142760 A (TOYOTA AUTO BODY CO LTD), 4 juin 1996 (1996-06-04)
- PATENT ABSTRACTS OF JAPAN vol. 016, no. 099 (M-1220), 11 mars 1992 (1992-03-11) & JP 03 276832 A (KANTO AUTO WORKS LTD), 9 décembre 1991 (1991-12-09)

## Description

L'invention concerne une console centrale de véhicule automobile. En particulier l'invention concerne une console centrale disposée entre les sièges avants du véhicule automobile et présentant un couvercle mobile.

La console centrale d'un véhicule automobile doit répondre à des critères de sécurité notamment en matière de solidarisation avec le véhicule en cas de freinage brusque ou de choc. De ce fait, les composants de la console centrale comme par exemple un couvercle, un accoudoir, un porte-gobelet sont liés de façon permanente sur le corps de la console. Bien entendu, ces composants peuvent avoir des mouvements relatifs par rapport à la console, mais ceux-ci sont des rotations ou des translations limitées sans rupture de la liaison rigide permanente avec le corps de la console.

L'un des buts de la présente invention est de proposer une console centrale dans laquelle l'accessibilité aux fonctions de rangement est sensiblement améliorée pour les occupants arrières sans détérioration pour les occupants avant.

US-A-6 003 716 décrit une console centrale de véhicule automobile comprenant :
- une enceinte comprenant un fond et quatre faces latérales issues du fond, lesdites faces formant une ouverture opposée audit fond,
- au moins un couvercle comprenant une face recto et une face verso, ayant des moyens d'accouplement à l'enceinte coopérant avec des moyens d'accouplement complémentaires portés par l'enceinte, et fermant au moins partiellement ladite ouverture, le couvercle étant complètement amovible,
dans laquelle console, lesdits moyens d'accouplement du couvercle sont complètement et simplement désolidarisables desdits moyens d'accouplement complémentaires de l'enceinte, et lesdits moyens d'accouplement et lesdits moyens d'accouplement complémentaires comprennent :
- des premiers moyens de rotation et des premiers moyens de rotation complémentaires définissant un premier axe de rotation du couvercle par rapport à l'enceinte, et
- des deuxièmes moyens de rotation et des deuxièmes moyens de rotation complémentaires définissant un deuxième axe de rotation du couvercle par rapport à l'enceinte sensiblement parallèle au premier axe de rotation,
lesdits premiers et deuxièmes moyens de rotation étant complètement et simplement désolidarisables desdits premiers et respectivement deuxièmes moyens de rotation complémentaires pour permettre respectivement la rotation du couvercle autour du deuxième axe de rotation, et la rotation du couvercle autour du premier axe de rotation.

Une des demandes des constructeurs automobiles en matière de console centrale de véhicule automobile comprend l'intégration d'un maximum de fonctions de rangement avec éventuellement une fonction accoudoir, dans un espace déterminé, présentant une ergonomie optimale vis à vis de l'ensemble des occupants du véhicule. Les solutions techniques répondant à cette demande sont limitées du fait des liaisons permanentes rigide avec le corps de la console. Ces liaisons rigides permanentes limitent les possibilités de modularité de la console centrale.

L'un des buts de la présente invention est de proposer une console centrale dans laquelle la modularité est sensiblement améliorée et en particulier d'intégrer un maximum de fonctions de rangement dans un espace déterminé.

Pour ce faire, conformément à l'invention, en position montée, lesdits moyens d'accouplement du couvercle coopèrent avec lesdits moyens d'accouplement complémentaires de l'enceinte, quelle que soit la face du couvercle en regard du fond de l'enceinte.

Certes, JP-A-07 266 966 divulgue une console centrale comprenant une enceinte, un couvercle et des moyens d'accouplement du couvercle coopérant avec des moyens d'accouplement complémentaires portés par l'enceinte quelle que soit la face en regard du fond de l'enceinte, toutefois cette fonction est obtenu au détriment d'une autre fonction puisque lesdits moyens d'accouplement et lesdits moyens d'accouplement complémentaires ne permettent de faire pivoter le couvercle qu'autour d'un seul axe de rotation.

La console peut avantageusement comprendre au moins des troisièmes moyens de rotation définissant un troisième axe de rotation du couvercle par rapport à l'enceinte, sécant avec les premier et second axes de rotation.

Dans un mode de réalisation les moyens d'accouplement et les moyens d'accouplement complémentaires comprennent quatre systèmes gorges en "Ω" / tourillons formant deux par deux, deux axes sensiblement parallèles.

Dans un autre mode de réalisation, les moyens d'accouplement et les moyens d'accouplement complémentaires comprennent quatre systèmes d'articulation à rotules formant deux par deux, deux séries de deux axes sensiblement parallèles, les axes d'une série étant perpendiculaires aux axes de l'autre série.

Dans un autre mode de réalisation, le couvercle comprend un cadre périphérique comportant lesdits moyens d'accouplement, et
un couvercle secondaire comprenant des moyens d'accouplement secondaire coopérant avec des moyens d'accouplement secondaires complémentaires portés par ledit cadre périphérique.

Selon une autre caractéristique de l'invention, le couvercle comprend au moins une paroi latérale issue de l'une des faces du couvercle formant avec ladite face un réceptacle.

Selon une autre caractéristique, la console comprend, en outre, des moyens fonctionnels rapportés ayant des moyens de solidarisation avec des moyens de solidarisation complémentaires portés par le couvercle.

Dans un mode de réalisation, les moyens de solidarisation des moyens fonctionnels rapportés sont des goujons enclipsables et les moyens de solidarisation complémentaire porté par le couvercle sont des trous dans lesquels sont enclipsés lesdits goujons enclipsables.

Un premier avantage de la présente invention résulte du caractère réversible du couvercle de la console permettant une modularité améliorée. Par exemple la face recto du couvercle peut présenter une surface complétant l'esthétique de la console avec une surface sensiblement dans le prolongement et épousant la forme de l'ouverture, et une surface verso comprenant des moyens fonctionnels de rangement de petit objet ou de porte gobelet. Pour pouvoir utiliser les deux faces du couvercle tout en préservant la fonction couvercle, le couvercle est complètement amovible et comprend des moyens d'accouplement à l'enceinte fonctionnant quelle que soit la face du couvercle que l'on souhaite utiliser.

Un autre avantage de la présente invention résulte de l'amélioration de l'accessibilité des espaces de rangement quel que soit l'occupant. Cela est dû aux moyens d'accouplements du couvercle et aux moyens d'accouplement complémentaires de l'enceinte autorisant plusieurs axes de rotation pour le couvercle. De façon optimale, il peut être prévu d'ouvrir le couvercle selon quatre axes parallèles deux à deux, formant ensemble un parallélogramme définissant sensiblement les quatre cotés du couvercle.

Un autre avantage de la présente l'invention résulte du coût de la fonction modularité sensiblement inférieur aux coûts élevés de la modularité dans les systèmes de rotation et/ou de translation avec liaison rigide permanent utilisés. De ce fait il est possible de proposer des consoles modulaires sur des véhicules dits "économiques.

D'autres avantages et caractéristiques de la présente invention résulteront de la description qui va suivre en référence aux dessins annexés dans lesquels:
La figure 1 est une représentation schématique d'une console selon la présente invention.
Les figures 2A à 2D sont des représentations schématiques illustrant le caractère modulable du couvercle de la console selon l'invention.
Les figures 3A à 3C sont des représentations schématiques illustrant le caractère d'accessibilité de la console selon l'invention.
La figure 4 est une représentation schématique selon l'invention d'une partie de couvercle de console centrale selon l'invention dans une forme de réalisation dite "à rotule".
La figure 5 est une représentation schématique selon l'invention d'une partie de couvercle de console centrale selon l'invention dans une forme de réalisation dite "à cadre".
La figure 6 est une répresentation schématique en coupe d'une partie de couvercle de console centrale comprenant des moyens fonctionels rapportés selon l'invention.

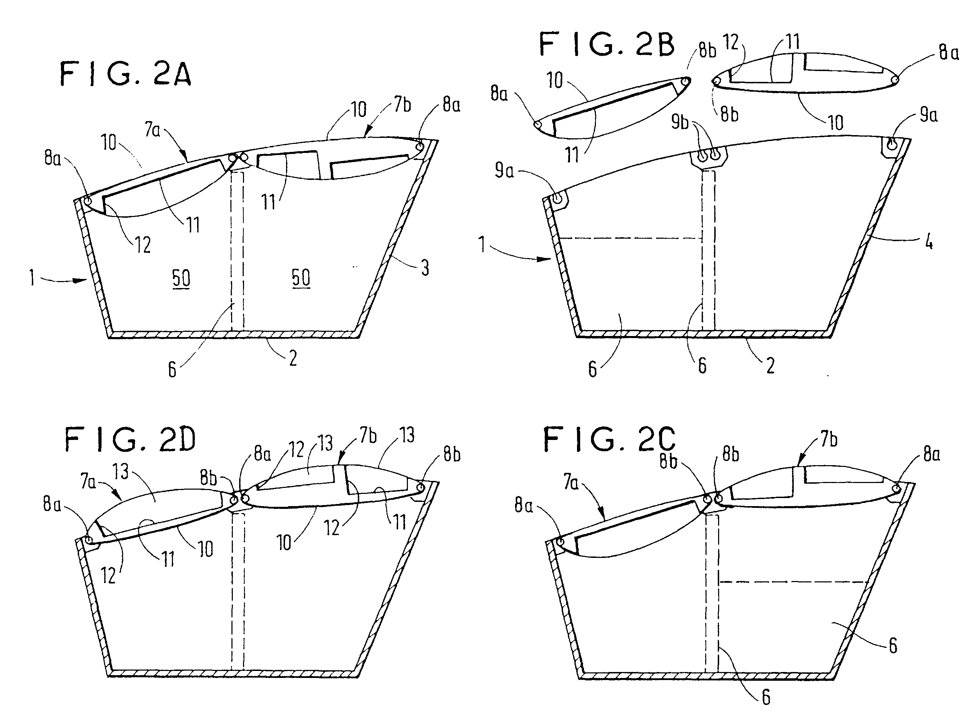

La console centrale selon l'invention comprend une enceinte 1 ayant un fond 2, et quatre faces latérales 3 issues du fond 2 et formant une ouverture 4 opposée au fond 2. L'enceinte 1 est en général associé au plancher du véhicule automobile entre les sièges avants (non représentés) de façon amovible ou fixe. L'enceinte 1 définie un espace de rangement 5. Dans un mode de réalisation, l'espace 5 peut être divisé en plusieurs sous-espace 50 par des parois 6 amovibles ou fixes par rapport à l'enceinte 1 (cf. figures 2A à 2D).

La console selon l'invention comprend au moins un couvercle 7 ayant une face recto 10 et une face verso 11. Le couvercle ferme au moins partiellement l'ouverture 4, une des faces 10, 11 étant alors en regard du fond 2 de l'enceinte 1. Le couvercle 7 est associé à l'enceinte 1 par des moyens d'accouplement 8a, 8b coopérants avec des moyens d'accouplement complémentaires 9a, 9b portés par l'enceinte 1. Les moyens d'accouplement 8a, 8b du couvercle 7 et les moyens d'accouplement complémentaires 9a, 9b de l'enceinte 1 sont tels qu'ils peuvent se désolidariser simplement et complètement les uns des autres. Autrement dit le couvercle 7 est complètement amovible. On entend par "simplement et complètement" le fait que le caractère totalement amovible du couvercle 7 constitue une des fonctions opérationnelles courantes de la console centrale accessible à tous les occupants du véhicule, et cela par opposition à un couvercle qui est démontable moyennant l'utilisation d'outils lors d'opérations exceptionnelles du type maintenance ou de réparation.

Les moyens d'accouplement 8a, 8b du couvercle 7 sont tels qu'ils coopèrent avec les moyens d'accouplement complémentaires 9a, 9b de l'enceinte quelle que soit la face 10, 11 du couvercle 7 en regard du fond 2.

Le couvercle de la console selon l'invention, en position montée sur l'enceinte peut pivoter indifféremment autour d'au moins deux axes de rotation 20, 21, 22, 23 pour cela, lesdits moyens d'accouplement 8a, 8b et lesdits moyens d'accouplement complémentaires 9a, 9b comprennent
des premiers moyens de rotation 8a et des premiers moyens de rotation complémentaire 9a, définissant un premier axe de rotation 20 du couvercle 7 par rapport à l'enceinte 1, et
des deuxièmes moyens de rotation 8b et des deuxièmes moyens de rotation complémentaires 9b, définissant un deuxième axe de rotation 21 du couvercle 7 par rapport à l'enceinte 1, ledit deuxième axe de rotation 21 étant sensiblement parallèle au premier axe de rotation 20.

Selon l'invention, lesdits premiers moyens de rotation 8a sont complètement et simplement désolidarisables desdits premiers 9a moyens de rotation complémentaires pour permettre la rotation du couvercle 7 autour du deuxième axe de rotation 21, et lesdits seconds moyens de rotation 8b sont complètement et simplement désolidarisables desdits seconds 9b moyens de rotation complémentaires pour permettre la rotation du couvercle 7 autour du premier axe de rotation 20.

Selon une autre caractéristique lesdits premiers moyens de rotation 8a et lesdits seconds moyens de rotation 8b sont tels qu'ils peuvent coopérer indifféremment avec l'un ou l'autre desdits premiers 9a, ou seconds 9b moyens de rotation complémentaire.

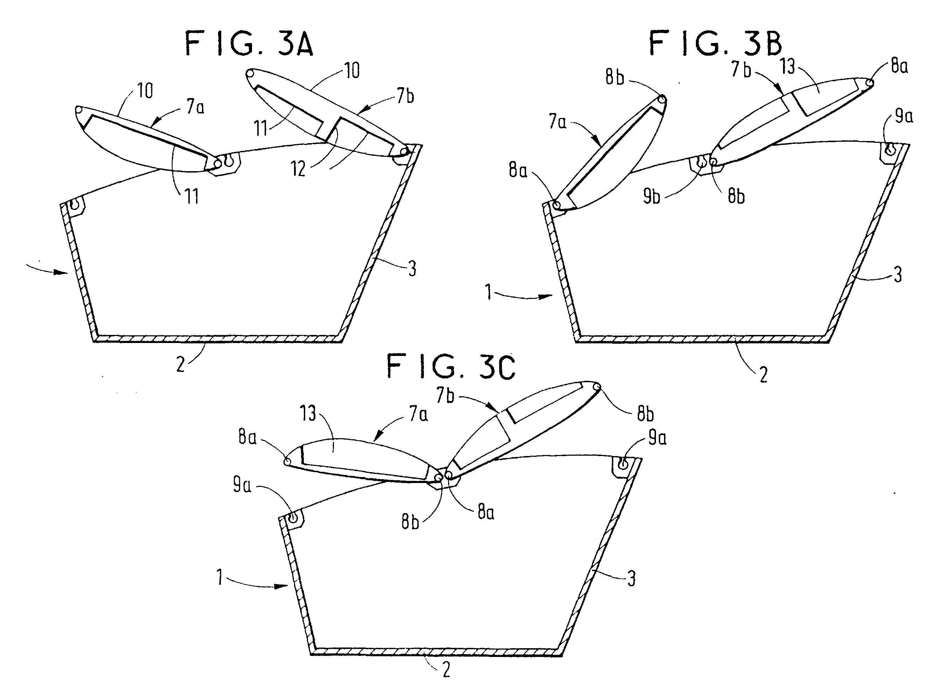

De ce fait le second axe de rotation 21 peut aussi être définis par la coopération des premiers moyens de rotation 8a avec les seconds moyens de rotation complémentaire 9b et le premier axe de rotation 20 peut aussi être définis par la coopération des seconds moyens de rotation 8b avec les premiers moyens de rotation complémentaire 9a (cf. couvercle 7b sur les figures 2C et 2D, ou 3B et 3C).

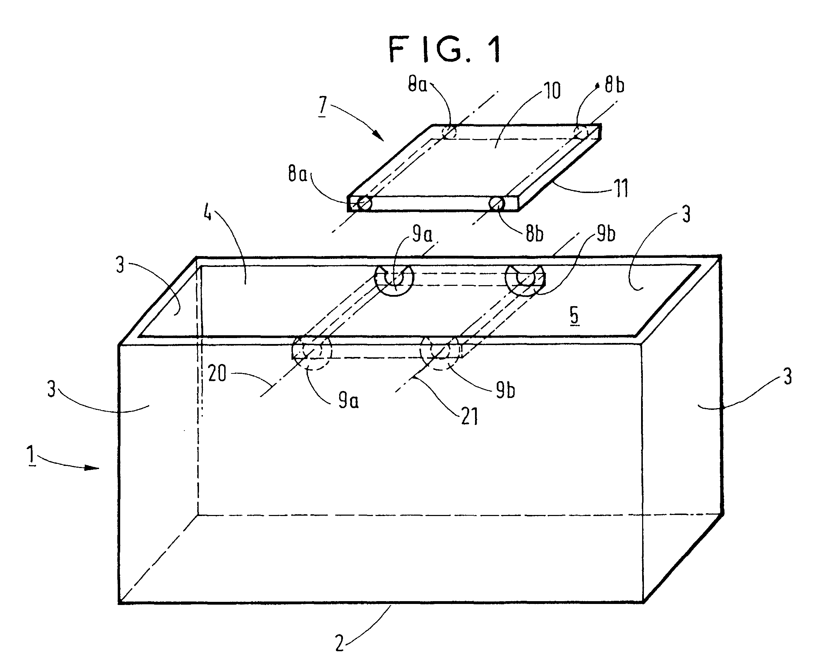

Les figures 1 à 3C représente une console selon l'invention dans la quelle les moyens d'accouplement 8a, 8b et les moyens d'accouplement complémentaires 9a, 9b comprennent quatre systèmes gorges en "Ω" 9a / tourillons 9b formant deux par deux, les deux axes sensiblement parallèles 20, 21. Sur les figures, les gorges en "Ω" sont portées par l'enceinte 1 et les tourillons sont portés par le couvercle 7. Bien entendu, l'assemblage inverse fait aussi partie de la présente invention.

Cette console à double axes de rotation permet, si les axes 20, 21 sont perpendiculaires à la direction d'avancement du véhicule automobile, l'accessibilité aisée au contenu de l'espace 5, 50 de la console par les passagers avant par rotation du couvercle autour d'un des axes de rotation, et accessibilité aisée au contenu de l'espace 5, 50 de la console par les passagers arrières par rotation du couvercle autour de l'autre des axes de rotation. Les figures 3A à 3C proposent quelques possibilités d'ouverture d'une console selon l'invention comprenant deux couvercles 7a, 7b.

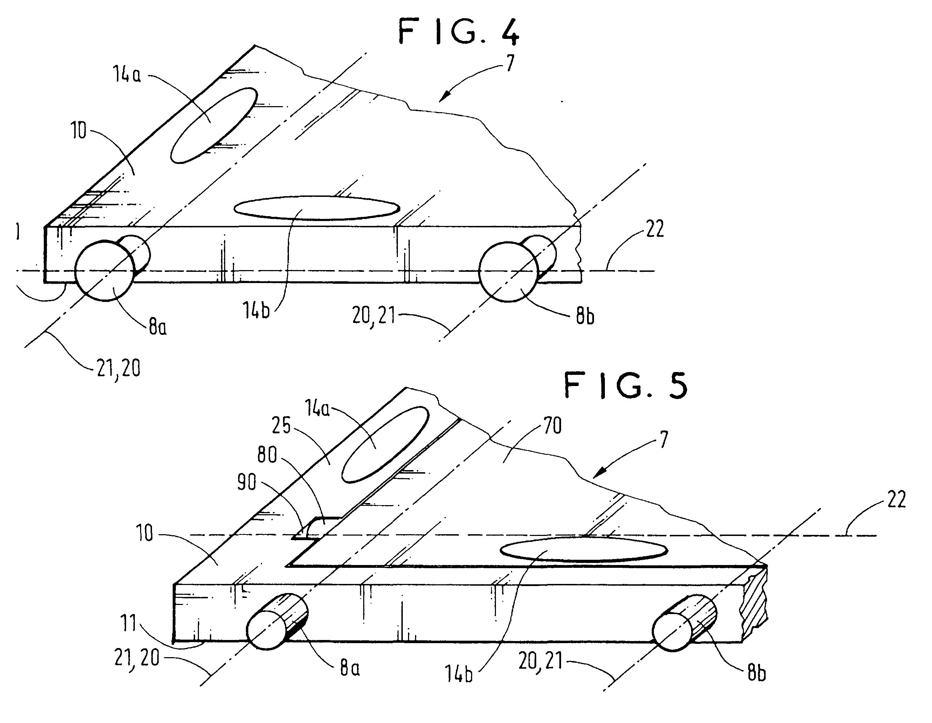

Dans mode de réalisation représenté partiellement sur la figure 4 les moyens d'accouplement et les moyens d'accouplement complémentaires comprennent quatre systèmes d'articulation à rotules formant deux par deux, deux séries de deux axes sensiblement parallèles, les axes 20, 21 d'une série étant perpendiculaires aux axes 22 de l'autre série.

Dans un autre mode de réalisation partiellement représenté sur la figure 5 le couvercle comprend un cadre périphérique 25, et
un couvercle secondaire 70 comprenant des moyens d'accouplement secondaires 80 coopérant avec des moyens d'accouplement secondaires complémentaires 90 portés par ledit cadre périphérique 25.

Des poignées d'ouverture 14a, 14b sont prévues de manière à faciliter l'ouverture du couvercle 7.

L'un des avantages d'une console selon l'invention est de permettre à l'utilisateur d'utiliser l'une ou l'autre des faces 10, 11 du couvercle 7. Dans un mode de réalisation représenté sur les figures 2A à 3D, l'une des faces 10, 11 du couvercle 7a, 7b comprend au moins une paroi latérale 12 issue de l'une 11 des faces 10, 11 du couvercle 7 et forme avec ladite face 11 un réceptacle 13. Dans la position de la figure 2A, les couvercles 7a, 7b présentent leur face recto 10 complétant l'esthétique de la console avec une surface sensiblement dans le prolongement et épousant la forme de l'ouverture 4 de la console. Dans les figures 2C et 2D, au moins un des couvercles 7a, 7b a été retourné coté verso, et offre au moins un réceptacle 13 de rangement.

Dans un mode de réalisation, la console comprend, en outre, des moyens fonctionnels rapportés 33, 34 ayant des moyens de solidarisation 31 avec des moyens de solidarisation complémentaires 30 portés par le couvercle 7. Ces moyens fonctionnels 33, 34 sont, par exemple non limitatif, un ou des accoudoir(s) 33, des éléments de maintien 34 d'objets tels que téléphone portable etc...

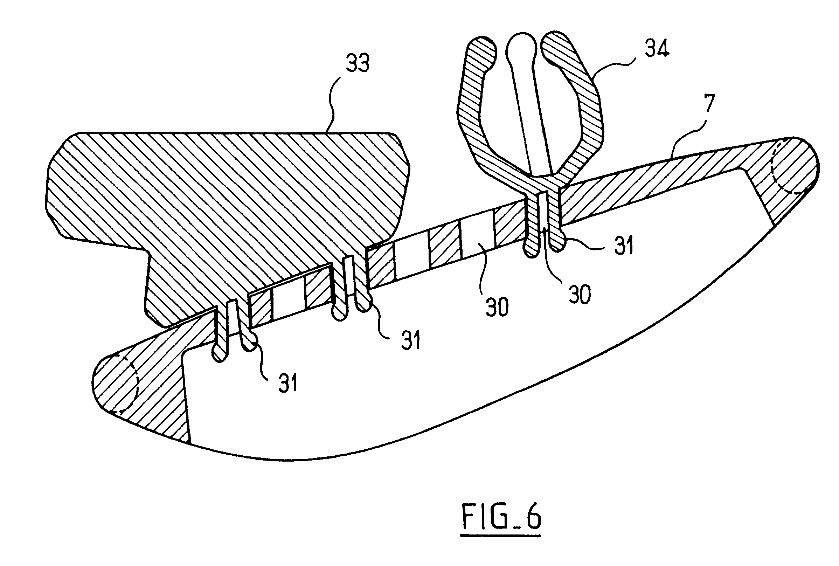

Dans l'exemple de réalisation représenté sur la figure 6, les moyens de solidarisation 31 des moyens fonctionnels rapportés 33, 34 sont des goujons 31 enclipsables et les moyens de solidarisation complémentaire 30 porté par le couvercle 7 sont des trous traversants 30 dans lesquels sont enclipsés lesdits goujons enclipsables 31.

## Revendications

1. Console centrale de véhicule automobile comprenant :
- une enceinte (1) comprenant un fond (2) et quatre faces latérales (3) issues du fond (2), lesdites faces (3) formant une ouverture (4) opposée audit fond (2),
- au moins un couvercle (7) comprenant une face recto (10) et une face verso (11), ayant des moyens d'accouplement (8a, 8b) à l'enceinte (1) coopérant avec des moyens d'accouplement complémentaires (9a, 9b) portés par l'enceinte (1), et fermant au moins partiellement ladite ouverture (4), le couvercle (7) étant complètement amovible,
dans laquelle console, lesdits moyens d'accouplement (8a, 8b) du couvercle (7) sont complètement et simplement désolidarisables desdits moyens d'accouplement complémentaires (9a, 9b) de l'enceinte (1), et lesdits moyens d'accouplement (8a, 8b) et lesdits moyens d'accouplement complémentaires (9a, 9b) comprennent :
- des premiers moyens de rotation (8a) et des premiers moyens de rotation complémentaires (9a) définissant un premier axe de rotation (20) du couvercle (7) par rapport à l'enceinte (1), et
- des deuxièmes moyens de rotation (8b) et des deuxièmes moyens de rotation complémentaires (9b) définissant un deuxième axe de rotation (21) du couvercle (7) par rapport à l'enceinte (1) sensiblement parallèle au premier axe de rotation (20),
lesdits premiers et deuxièmes moyens de rotation (8a, 8b) étant complètement et simplement désolidarisables desdits premiers et respectivement deuxièmes moyens de rotation complémentaires (9a, 9b) pour permettre respectivement la rotation du couvercle (7) autour du deuxième axe de rotation (21), et la rotation du couvercle (7) autour du premier axe de rotation (20),
**caractérisée en ce que**, en position montée, lesdits moyens d'accouplement (8a, 8b) du couvercle (7) coopèrent avec lesdits moyens d'accouplement complémentaires (9a, 9b) de l'enceinte (1), quelle que soit la face (10, 11) du couvercle (7) en regard du fond (2) de l'enceinte (1).

2. Console centrale selon la revendication 1 **caractérisée en ce que** lesdits premiers moyens de rotation (8a) et lesdits seconds moyens de rotation (8b) coopèrent indifféremment avec l'un ou l'autre desdits premiers ou seconds moyens de rotation complémentaire (9a, 9b).

3. Console centrale selon la revendication 1 **caractérisée en ce qu'**elle comprend au moins des troisièmes moyens de rotation (8a, 8b, 9a, 9b; 90, 80) définissant un troisième axe de rotation (22) du couvercle (7) par rapport à l'enceinte (1), sécant avec les premier et second axes de rotation (20, 21).

4. Console centrale selon l'une quelconque des revendications 1 à 3 **caractérisée en ce que** les moyens d'accouplement (8a, 8b) et les moyens d'accouplement complémentaires (9a, 9b) comprennent quatre systèmes gorges en "Ω" (9a, 9b) / tourillons (8a, 8b) formant deux par deux, deux axes (20, 21) sensiblement parallèles.

5. Console centrale selon l'une quelconque des revendications 1 à 3 **caractérisée en ce que** les moyens d'accouplement et les moyens d'accouplement complémentaires comprennent quatre systèmes d'articulation à rotules formant deux par deux, deux séries de deux axes sensiblement parallèles, les axes d'une série étant perpendiculaires aux axes de l'autre série.

6. Console centrale selon l'une quelconque des revendications 1 à 5 **caractérisée en ce que** le couvercle (7) comprend un cadre périphérique (25) comportant lesdits moyens d'accouplement (8a, 8b), et
un couvercle secondaire (70) comprenant des moyens d'accouplement secondaire (80) coopérant avec des moyens d'accouplement secondaires complémentaires (90) portés par ledit cadre périphérique (25).

7. Console centrale selon l'une quelconque des revendications 1 à 6 **caractérisée en ce que** le couvercle (7) comprend au moins une paroi latérale (12) issue de l'une des faces (11) du couvercle (7) formant avec ladite face (11) un réceptacle (13).

8. Console centrale selon l'une quelconque des revendications 1 à 5 **caractérisée en ce qu'**elle comprend, en outre, des moyens fonctionnels rapportés (33, 34) ayant des moyens de solidarisation (31) coopérant avec des moyens de solidarisation complémentaires (30) portés par le couvercle (7).

9. Console centrale selon la revendication 8 **caractérisée en ce que** les moyens de solidarisation (31) des moyens fonctionnels rapportés (33, 34) sont des goujons enclipsables (31) et les moyens de solidarisation complémentaires (30) portés par le couvercle (7) sont des trous (30) dans lesquels sont clipsés lesdits goujons enclipsables (31).

## Patentansprüche

1. Mitteltunnel eines Kraftfahrzeuges mit:
- einer Einfassung (1) mit einem Boden (2) und vier Seitenflächen (3), die von dem Boden (2) ausgehen, wobei die Flächen (3) eine Öffnung (4) bilden, welche dem Boden (2) gegenüberliegt,
- mindestens einem Deckel (7), der eine Vorderseite (10) und eine Rückseite (11) aufweist, Ankopplungsmittel (8a, 8b) an die Einfassung (1) hat, welche mit komplementären Ankopplungsmitteln (9a, 9b) zusammenwirken, die durch die Einfassung (1) getragen werden, und mindestens teilweise die Öffnung (4) schließt, wobei der Deckel (7) völlig abnehmbar ist,
wobei in dem Tunnel die Ankopplungsmittel (8a, 8b) des Deckels (7) völlig und einfach von den komplementären Ankopplungsmitteln (9a, 9b) der Einfassung (1) abnehmbar sind, und die Ankopplungsmittel (8a, 8b) und die komplementären Ankopplungsmittel (9a, 9b) aufweisen:
- erste Drehmittel (8a) und erste komplementäre Drehmittel (9a), die eine erste Drehachse (20) des Deckels (7) bezüglich der Einfassung (1) bestimmen, und
- zweite Drehmittel (8b) und zweite komplementäre Drehmittel (9b), welche eine zweite Drehachse (21) des Deckels (7) bezüglich der Einfassung (1) im wesentlichen parallel zu der ersten Drehachse (20) bestimmen,
wobei die ersten und zweiten Drehmittel (8a, 8b) vollkommen und leicht von den ersten bzw. zweiten komplementären Drehmitteln (9a, 9b) trennbar sind, um jeweils die Drehung des Deckels (7) um die zweite Drehachse (21) und die Drehung des Deckels (7) um die erste Drehachse (20) zu gestatten,
**dadurch gekennzeichnet, daß** in montierter Position die Ankopplungsmittel (8a, 8b) des Dekkels (7) mit den komplementären Ankopplungsmitteln (9a, 9b) der Einfassung (1) zusammenwirken, ganz gleich wie die Fläche (10, 11) des Deckels (7) bezüglich des Bodens (2) der Einfassung (1) sein mag.

2. Mitteltunnel nach Anspruch 1, **dadurch gekennzeichnet, daß** die ersten Drehmittel (8a) und die zweiten Drehmittel (8b) unterschiedslos mit dem einen oder dem anderen der ersten oder zweiten komplementären Drehmittel (9a, 9b) zusammenwirken.

3. Mitteltunnel nach Anspruch 1, **dadurch gekennzeichnet, daß** er mindestens dritte Drehmittel (8a, 8b, 9a, 9b; 90, 80) aufweist, welche eine dritte Drehachse (22) des Deckels (7) bezüglich der Einfassung (1) bestimmen, welche die erste und zweite Drehachse (20, 21) schneidet.

4. Mitteltunnel nach einem der Ansprüche 1 bis 3, **dadurch gekennzeichnet, daß** die Ankopplungsmittel (8a, 8b) und die komplementären Ankopplungsmittel (9a, 9b) vier Auskehlungs-(9a, 9b)-/Lagerzapfensysteme (8a, 8b) als "Omega" aufweisen, welche paarweise zwei im wesentlichen parallele Achsen (20, 21) bilden.

5. Mitteltunnel nach einem der Ansprüche 1 bis 3, **dadurch gekennzeichnet, daß** die Ankopplungsmittel und die komplementären Ankopplungsmittel vier Gelenklagersysteme aufweisen, die paarweise zwei Reihen von im wesentlichen parallelen Achsen bilden, wobei die Achsen einer Reihe senkrecht zu den Achsen der anderen Reihe sind.

6. Mitteltunnel nach einem der Ansprüche 1 bis 5, **dadurch gekennzeichnet, daß** der Deckel (7) einen Umfangsrahmen (25) hat, der die Ankopplungsmittel (8a, 8b) aufweist, und ein sekundärer Deckel (70) sekundäre Ankopplungsmittel (80) aufweist, die mit komplementären, sekundären Ankopplungsmitteln (90) zusammenwirken, welche durch den Umfangsrahmen (25) getragen werden.

7. Mitteltunnel nach einem der Ansprüche 1 bis 6, **dadurch gekennzeichnet, daß** der Deckel (7) mindestens eine Seitenwand (12) aufweist, welche aus einer der Flächen (11) des Deckels (7) hervorgegangen ist, wobei sie mit der Fläche (11) einen Aufnahmebehälter (13) bildet.

8. Mitteltunnel nach einem der Ansprüche 1 bis 5, **dadurch gekennzeichnet, daß** er ferner angebaute Funktionsmittel (33, 34) aufweist, die Verbindungsmittel (31) haben, welche mit komplementären Verbindungsmitteln (30) zusammenwirken, die durch den Deckel (7) getragen werden.

9. Mitteltunnel nach Anspruch 8, **dadurch gekennzeichnet, daß** die Verbindungsmittel (31) der angebauten Funktionsmittel (33, 34) einklipsbare Stifte (31) sind und die komplementären Verbindungsmittel (30), welche durch den Deckel (7) getragen werden, Löcher (30) sind, in welche die einklipsbaren Stifte (31) eingeklemmt werden.

## Claims

1. A motor vehicle central console comprising:
- an enclosure (1) comprising a base (2), and four lateral faces (3) arising from the base (2), said faces (3) forming an opening (4) opposite to said base (2),
- at least one lid (7) comprising a recto face (10) and a verso face (11), having means (8a, 8b) for coupling to the enclosure (1) co-operating with complementary coupling means (9a, 9b) borne by the enclosure (1), and at least partially closing said opening (4), the lid (7) being completely removable,
wherein said coupling means (8a, 8b) of the lid (7) being completely and simply disconnectable from said complementary coupling means (9a, 9b) of the enclosure (1), and said coupling means (8a, 8b) and said complementary coupling means (9a, 9b) comprise:
- first rotation means (8a) and first complementary rotation means (9a) defining a first axis (20) of rotation of the lid (7) relative to the enclosure (1), and
- second rotation means (8b) and second complementary rotation means (9b) defining a second axis (21) of rotation of the lid (7) relative to the enclosure (1) substantially parallel to the first axis (20) of rotation,
said first and second rotation means (8a, 8b) being completely and simply disconnectable from said first and respectively second complementary rotation means (9a, 9b) to permit, respectively, the rotation of the lid (7) about the second axis (21) of rotation, and the rotation of the lid (7) about the first axis (20) of rotation,
**characterised in that**, in the mounted position, said coupling means (8a, 8b) of the lid (7) co-operate with said complementary coupling means (9a, 9b) of the enclosure (1), regardless of which face (10, 11) of the lid (7) is facing towards the base (2) of the enclosure (1).

2. A central console according to claim 1, **characterised in that** said first rotation means (8a) and said second rotation means (8b) co-operate equally well with either of said first or second complementary rotation means (9a, 9b).

3. A central console according to claim 1, **characterised in that** it comprises at least third rotation means (8a, 8b, 9a, 9b ; 90, 80) defining a third axis (22) of rotation of the lid (7) relative to the enclosure (1), intersecting with the first and second axes of rotation (20, 21).

4. A central console according to any one of claims 1 to 3, **characterised in that** the coupling means (8a, 8b) and the complementary coupling means (9a, 9b) comprise four "Ω"-groove (9a, 9b) and journal systems (8a, 8b) forming, in pairs, two substantially parallel axes (20, 21).

5. A central console according to any one of claims 1 to 3, **characterised in that** the coupling means and the complementary coupling means comprise four ball-and-socket joint systems forming, in pairs, two series of two substantially parallel axes, the axes of one series being perpendicular to the axes of the other series.

6. A central console according to any one of claims 1 to 5, **characterised in that** the lid (7) comprises a peripheral frame (25) including said coupling means (8a, 8b), and
a secondary lid (70) comprising secondary coupling means (80) co-operating with complementary secondary coupling means (90) borne by said peripheral frame (25).

7. A central console according to any one of claims 1 to 6, **characterised in that** the lid (7) comprises at least one lateral wall (12) arising from one of the faces (11) of the lid (7) forming with said face (11) a receptacle (13).

8. A central console according to one of claims 1 to 5, **characterised in that** it further comprises added-on functional means (33, 34) having connection means (31) co-operating with complementary connection means (30) borne by the lid (7).

9. A central console according to claim 8, **characterised in that** the connection means (31) of the added-on functional means (33, 34) are clip-in pins (31) and the complementary connection means (30) borne by the lid (7) are holes (30) into which said clip-in pins (31) are clipped.
